# EUROPEAN PATENT SPECIFICATION

(11) **EP 1 802 044 B1**
(45) Date of publication and mention of the grant of the patent: **02.12.2009**
(21) Application number: 05022686.9
(22) Date of filing: 18.10.2005
(51) Int. Cl.: H04W 88/04

(54) **Methods and systems for delivering data**
Verfahren und System zum Abliefern von Daten
Procédé et système pour fournir des données

(43) Date of publication of application: 27.06.2007
(73) Proprietor: SIEMENS AKTIENGESELLSCHAFT, 80333 München (DE)
(72) Inventor: Karger, Stephan, 76744 Wörth am Rhein (DE); Langefeld, Dirk, 40764 Langenfeld (DE); Obermanns, Sebastian, 46395 Bocholt (DE); Rösen, Benedikt, 46459 Rees (DE)

(56) References cited:
- EP-A- 1 411 688
- LEE K W ET AL: "Load mitigation in cellular data networks by peer data sharing over WLAN channels" COMPUTER NETWORKS, ELSEVIER SCIENCE PUBLISHERS B.V., AMSTERDAM, NL, vol. 47, no. 2, 4 February 2005 (2005-02-04), pages 271-286, XP004654939 ISSN: 1389-1286
- SEUNG-SEOK KANG ET AL: "Mobile peer membership management to support multimedia streaming" MULTIMEDIA SIGNAL PROCESSING, 2002 IEEE WORKSHOP ON 9-11 DEC. 2002, PISCATAWAY, NJ, USA,IEEE, 19 May 2003 (2003-05-19), pages 770-775, XP010642463 ISBN: 0-7803-7713-3

## Description

### Field of the invention

The invention generally relates to the field of delivering data.

### Background art

In places with a high mobile station density, also known as hot spots, it is necessary to utilize the available bandwidth optimally in order to be able to guarantee a good service quality in a mobile network. For this purpose, usually the network access points, such as base stations, are located relatively close to each other so that lower average transmission power suffices to enable the usual connection quality. However, this is possible only if the mobile station density is known in advance, at least as statistical average. Usually, it is well possible to use a statistical average in some locations with a predictable user density, such as at airports, railway stations and so forth.

In many mobile networks, different kinds of services are offered so that many users may obtain the same data. This data can be transmitted particularly efficiently over broadcast or multicast channels that can be received by all users or a particular user group simultaneously.

For delayed use of such data there is usually too little memory available at most terminals. For this reason, repeated data transmission from a possibly remote located network access point may be necessary. This tends to consume network resources a lot, especially if the air interface is used between the communication from the network access point and the terminal. Furthermore, if a hot spot is spontaneously created to a location that is far from the closest base station, the desired quality of service cannot be provided any more.

If there is a football match at the football stadium of town A at the same time when there is another football match in another town B, the course of the match in town B may for any reason be of interest to the spectators of the match in town A. Now if there were a goal in stadium in B, there would be a very large number of spectators in stadium A that were within a short period of time downloading a video clip of this goal. If the network access point is relatively far, the situation may easily lead to overload of available resources.

Services requiring transmission of large amount of data are usually offered in broadcast or in multicast. These services cannot be called at a later point of time, because transmission over dedicated channels in a hot spot would consume too much of the resources available, usually needed also for other services. If the location of a hot spot is known in advance, the network operator may increase the density of base stations so that all data can be transmitted with a lower transmit power. Unfortunately, hot spots can be created also sporadically and at unpredicted geographical areas.

In "LEE KW ET AL: "Load mitigation in cellular data networks by peer data sharing over WLAN channels" COMPUTER NETWORKS, ELSEVIER SCIENCE PUBLISHERS B.V., AMSTERDAM, NL, vol. 47, no. 2,4 February 2005 (200502-04), pages 271-286, XP004654939 ISSN: 1389-1286", a method and system is taught, where WLAN terminals as part of an ad-hoc network function as local proxies by means of locally storing each retrieved file and transmitting file directly within the ad-hoc to another terminal, when the file is requested once again.

### Summary of the invention

An object of the invention is to adaptively increase network capacity when a hot spot is formed. This object may be achieved with a method as set out in claim 1 or with a system as set out in claim 10.

The dependent claims describe various advantageous embodiments of the method and of the system.

### Advantages of the invention

If a method for delivering data comprises a detecting step, in which upon detecting in a network that a file has been transmitted from a network access point, such as a base station, to more than one terminal, a first terminal is commanded to temporarily store said file, and a commanding step, where in response to receiving a request for said file from a second terminal a) the second terminal is commanded to retrieve the file from the first terminal or b) the first terminal is commanded to transmit the file to the second terminal, the quality of service in the network does not need to degrade much because of the hot spot, but automated peer-to-peer transmission may be used to relieve the load of the network access point and of the interface through which the network access point and the requesting terminals communicate.

If in the detecting step it is further checked that the transmission of the file to more than one terminal has been performed using a transmission channel, at least some characteristics of which fulfill a predefined criteria, such as the transmission power exceeding a threshold, those transmissions which have taken place on a transmission channel with different characteristics can be omitted. This may support to avoid the quality degradation because localized hot spots that can be remotely located from a network access point may be better detected.

If the retrieval of the file to the second terminal from the first terminal or the transmission of the file from the first terminal to the second terminal is commanded only if the transmission can be performed using local communication means, a hot spot can be served by a terminal located within the hot spot. This may help to reduce load of the interface between the network access point and the hot spot.

If the retrieval of the file to the second terminal from the first terminal or the transmission of the file from the first terminal to the second terminal is commanded only if the transmission can be performed using local communication means with a transmission power less than a threshold, the threshold preferably being less than the transmission power between the network access point and the second terminal, available communication interfaces within the hot spot can be used more economically.

If the commanding step is performed by sending a command message to the first terminal, the first terminal being adapted to store said file in response to said command message for a period of time, the use of memory in terminals may be reduced because they do not need to store the files in advance to receiving said command message.

If the duration of the period of time is indicated in the command message, the length of the period may be changed. This enables e.g. using the size of the hot spot or the kind of the file to find a balance in saving resources in communication interfaces of the hot spot or in the terminal.

If the file is sent to the first terminal with the command message, retransmission of the file may be better avoided. In this manner, it is possible to use a terminal that is only requesting the transmission of the file, in contrast to a solution where a terminal that already has received the file.

If the file is stored in the first terminal encrypted, tampering of the file may be better avoided so that the other terminals may receive the original file instead of a version that has been tampered with. For this purpose, the decryption key is preferably transmitted to the second terminal from the network access point.

### List of Figures

Figure 1 illustrates a number of mobile stations in a radio access network;
Figure 2 shows some embodiments for delivering a file; and
Figure 3 shows some functional blocks of a mobile station.

### Detailed description

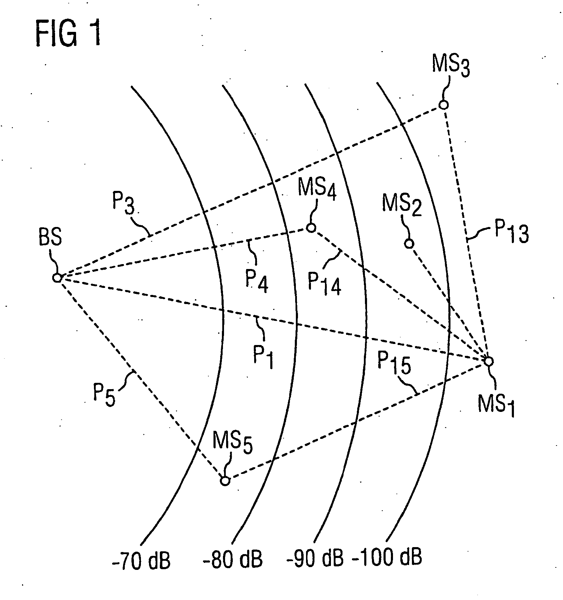

Figure 1 illustrates a number of mobile stations MS in a radio access network. The mobile stations MS are located in different positions as seen from a base station BS. Some attenuation curves (-70 dB, -80 dB, -90 dB, -100 dB) showing average attenuation of power of a signal transmitted by the base station BS are marked. Attenuation increases by increasing distance from the base station BS, and obstacles etc. may increase attenuation of power further. One measure that can be used to characterize that can be measured at a mobile station MS is RXLEV.

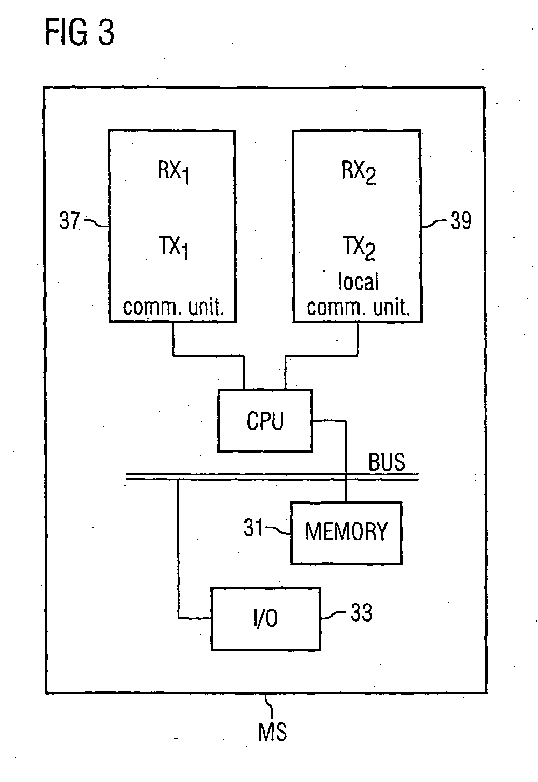

Figure 3 shows some functional blocks of a mobile station MS. The mobile station MS comprises communication unit 37, preferably a radio communication unit, comprising a receiving unit RX₁ and a transmission unit TX₁. With the communication unit 37, the mobile station MS can communicate with a network NW, an of which the base station BS is an access point.

The mobile station MS also comprises a local communication unit 39, preferably a radio communication unit, comprising a receiving unit RX₂ and a transmission unit TX₂.

The main difference between the local communication unit 39 and the communication unit 37 is that the local communication unit 39 is used for near-field communication whereas the communication unit 37 is used for far-field communication. Both receiving units RX₁ and RX₂ and transmission units TX₁ and TX₂ may be radio communication units. For example, the receiving unit RX₂ and transmission unit TX₂ can be adapted to use WLAN or Bluetooth, whereas the receiving unit RX₂ and transmission unit TX₂ can be adapted to use GPRS, UMTS or WIMAX.

A processing unit CPU is preferably adapted to control both communication unit 37 and local communication unit 39. The mobile station MS comprises memory 31 and input and output unit 33, such as display, audio output and keypad.

As illustrated in Figure 1, for a mobile station MS to successfully receive data from a base station BS via the communication unit 37, the required transmission power at the base station BS may be different depending on the distance of the mobile station MS from the base station BS. For example, in order to enable a successful reception at mobile station MS₁, the transmission power P₁ should be used. For mobile station MS₂ transmission power P₂ would suffice, for mobile station MS₃ transmission power P₃ would do, for mobile station MS₄ transmission power P₄, and for mobile station MS₅ transmission power P₅ would be required. The required transmission powers do not need to be equal, as shown in Figure 1, where {P₁, P₃} > P₂ > P₄ > P₅.

By using its local communication unit 39, mobile station MS₁ could transmit to mobile station MS₂ with a transmission power P₁₂, to mobile station MS₃ with a transmission power P₁₃, to mobile station MS₄ with a transmission power P₁₄, and to MS₅ with a transmission power P₁₅.

Especially in cases where local communication units 39 use radio communication at frequency ranges different from the frequency ranges used by communication units 37 of mobile stations MS, load in the air interface used for communication between base stations BS and mobile stations MS could be reduced by using the local communication unit 39 instead of the communication unit 37.

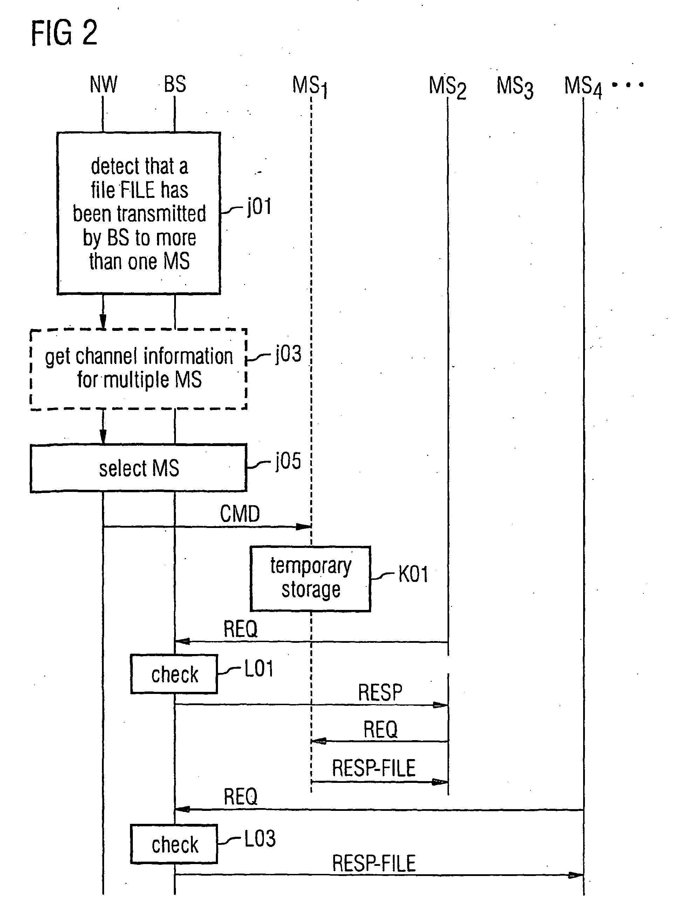

Figure 2 illustrates an embodiment of the invention. If the network detects that same data is requested for a multiple times on a spatially limited area, whereby all base stations are relatively far from each other, the network operator can request a suitable terminal close to that area to temporarily store the file and carry out the forwarding of the data on request of a further terminal. The forwarding terminal can use for this purpose uni-, multi-, any- or broadcast. The base station can then instruct the relay terminal for how long time the data must be temporarily stored.

In a detecting step J01, the network NW detects that a file FILE has been transmitted from a base station BS to more than one mobile station MS, and commands a first mobile station MS₁ to temporarily store said file FILE.

In response to receiving a request REQ for said file FILE from a second terminal MS₂, the network NW commands the second terminal MS₂ to retrieve the file FILE from the first mobile station MS₁. Instead or in addition, the network NW could also command the first mobile station MS₁ to transmit the file FILE to the second mobile station MS₂.

The detecting step J01 the network NW may further check that the transmission of the file FILE to more than one mobile station MS has been performed using a transmission channel, at least some characteristics of which fulfill a predefined criteria, such as the transmission power exceeding a threshold.

Optionally, in a checking step it may be tested whether the retrieval of the file FILE to a mobile station MS from the first mobile station MS₁ or the transmission of the file FILE from the first mobile station MS₁ to a mobile station MS can be performed using a local communication unit 39, preferably with a transmission power less than a threshold, the threshold preferably being less than the transmission power between the network access point BS and the mobile station MS. The transmission or retrieval is then commanded only if the result of the checking step is positive.

In the example of Figure 2, in the checking step L01 it is detected that the transmission of the file FILE from the first mobile station MS₁ to the second mobile station MS₂ can be performed using a local communication unit 39. In the checking step L03 it is detected that the transmission of the file FILE from the first mobile station MS₁ to the fourth mobile station MS₄ cannot be performed using a local communication unit 39. Therefore the network NW responds to a request REQ with a message RESP_FILE comprising the file FILE. The checking step L01, L03 may be performed in the network, either in the radio access network or in the base station BS. The decision may be made responsive to channel properties for the transmission channel between the base station BS and the mobile station MS. For example, if for communication from the base station BS to the mobile station MS a power level TXLEV different to the TXLEV used for communication from the base station BS to the first mobile station MS₁ is used, if the difference is larger than a threshold, the first mobile station MS₁ is not used as a relay mobile station but the file FILE is transmitted from the base station BS.

The commanding step may be performed by the network NW, preferably via the base station BS, by sending a command message CMD to the first mobile station MS₁, the first mobile station MS₁ being adapted to store (step K01) said file FILE in response to said command message CMD for a period of time. The duration of the period of time may be indicated in the command message CMD, and the file FILE may be sent to the first mobile station MS₁ with the command message CMD.

The file FILE may be stored in the first mobile station MS₁ encrypted. Then a required decryption key is preferably transmitted to the second mobile station MS₂ from the network NW, preferably via the base station BS.

In the football match example from above, the network NW may detect that a large number of users at stadium in A have already requested a video file, and can therefore assume that further subscribers are going to request the same video file. Therefore the network NW sends the video file to a suitable mobile station MS₁ at stadium A and requests it to store the file. When from the stadium A further mobile stations MS₂, MS₄ request the video file from the network operator, a base station BS requests the mobile station MS₁ that stored the video file to forward it. In order to avoid misuse of the filed by the mobile station MS₁, an encryption can be used for the video file.

If hot spots are sporadically created at a place, close to which there are no or not enough base stations, the file FILE needs to be transmitted only once with a higher transmission power and thereby also higher consumption of network resources. Afterwards the file FILE can be sent by the relay mobile station MS₁ with a smaller transmit power, thereby saving resources in the hot spot. Preferably, telecommunication standards with high data rates are be used, e.g. Bluetooth, WLAN or WIMAX.

The selection of the relay mobile station MS₁ may further comprise step J03 where channel information for multiple mobile stations is compared, and step J05 where the relay mobile station MS₁ is selected from the multiple mobile stations. Preferably, the relay mobile station MS₁ is selected so that it is within the radio access network of the network NW so that there is a large number of mobile stations MS with similar channel properties, i.e. within the reach of the local communication unit 39 of the relay mobile station MS₁.

Even though the invention was described by way of examples, the skilled person appreciates that the invention is not limited to these embodiments but cannot be modified within the scope of the patent claims. Especially, instead of mobile stations, any suitable terminal devices may be used. If mobile stations are used, they may be adapted to work within GPRS or UMTS network with their communication units 37. Instead of a base station BS, any network access point may be used. The network NW does not need to be a mobile network, such as GPRS or UMTS network, but it be any network, also including the Internet.

## Claims

1. A method for delivering data, **comprising the steps of**:
- in a detecting step, upon detecting in a network (NW) that a file (FILE) has been transmitted from a network access point (BS), such as a base station, to more than one terminal (MS), commanding a first terminal (MS₁) to temporarily store said file (FILE); and
- in response to receiving in said network (NW) a request (REQ) for said file (FILE) from a second terminal (MS₂), commanding: a) the second terminal (MS₂) to retrieve the file (FILE) from the first terminal (MS₁) or b) the first terminal (MS₁) to transmit the file (FILE) to the second terminal (MS₂).

2. A method according to claim 1, **wherein:** in the detecting step it is further checked that the transmission of the file (FILE) to more than one terminal (MS) has been performed using a transmission channel, at least some characteristics of which fulfill a predefined criteria, such as the transmission power exceeding a threshold.

3. A method according to claim 1 or 2, **wherein:** the retrieval of the file (FILE) to the second terminal (MS₂) from the first terminal (MS₁) or the transmission of the file (FILE) from the first terminal (MS₁) to the second terminal (MS₂) is commanded only if the transmission can be performed using local communication means (39).

4. A method according to claim 3, **wherein:** the retrieval of the file (FILE) to the second terminal (MS₂) from the first terminal (MS₁) or the transmission of the file (FILE) from the first terminal (MS₁) to the second terminal (MS₂) is commanded only if the transmission can be performed using local communication means (39) with a transmission power less than a threshold, the threshold preferably being less than the transmission power between the network access point (BS) and the second terminal (MS₂).

5. A method according to any one of the preceding claims, **wherein:** the commanding step is performed by sending a command message (CMD) to the first terminal (MS₁), the first terminal (MS₁) being adapted to store said file (FILE) in response to said command message (CMD) for a period of time.

6. A method according to claim 5, **wherein:** the duration of the period of time is indicated in the command message (CMD).

7. A method according to claim 5 or 6, **wherein:** the file (FILE) is sent to the first terminal (MS₁) with the command message (CMD).

8. A method according to any one of the preceding claims, **wherein:** the file (FILE) is stored in the first terminal (MS₁) encrypted.

9. A method according to claim 8, **further comprising the step of**: transmission a decryption key to the second terminal (MS₂) from the network access point (BS).

10. A system for delivering data, **comprising:** means adapted to carry out the method steps according to any one of the preceding claims.

11. A system according to claim 10, **wherein:** said means comprise software code, adapted to carry out the method steps according to any one of the preceding claims 1 to 10, when executed in a processing unit.

12. A system according to claim 11, **wherein:** the processing unit is in the network (NW).

## Patentansprüche

1. Verfahren für das Übermitteln von Daten, das folgende Schritte umfasst:
- bei einem Erfassungsschritt: nach Erfassen, dass eine Datei (FILE) in einem Netzwerk (NW) von einem Netzwerkzugangspunkt (BS) wie einer Basisstation an mehr als ein Endgerät (MS) übertragen wurde, wird einem ersten Endgerät (MS₁) befohlen, die Datei (FILE) vorübergehend zu speichern, und
- als Reaktion auf das Empfangen einer Anforderung (REQ) dieser Datei (FILE) von einem zweiten Endgerät (MS₂) in dem Netzwerk (NW) wird befohlen, dass a) das zweite Endgerät (MS₂) die Datei (FILE) vom ersten Endgerät (MS₁) abruft oder b) das erste Endgerät (MS₁) die Datei (FILE) an das zweite Endgerät (MS₂) überträgt.

2. Verfahren nach Anspruch 1, bei dem bei dem Erfassungsschritt des Weiteren überprüft wird, ob die Übertragung der Datei (FILE) an mehr als ein Endgerät (MS) über einen Übertragungskanal erfolgt ist, bei dem zumindest einige Kenndaten vorgegebene Kriterien erfüllen, wie beispielsweise dass die Übertragungsleistung einen Grenzwert überschreitet.

3. Verfahren nach Anspruch 1 oder 2, bei dem das Abrufen der Datei (FILE) vom ersten Endgerät (MS₁) zum zweiten Endgerät (MS₂) oder das Übertragen der Datei (FILE) vom ersten Endgerät (MS₁) an das zweite Endgerät (MS₂) nur dann befohlen wird, wenn die Übertragung über lokale Kommunikationsmittel (39) erfolgen kann.

4. Verfahren nach Anspruch 3, bei dem das Abrufen der Datei (FILE) vom ersten Endgerät (MS₁) zum zweiten Endgerät (MS₂) oder das Übertragen der Datei (FILE) vom ersten Endgerät (MS₁) an das zweite Endgerät (MS₂) nur dann befohlen wird, wenn die Übertragung über lokale Kommunikationsmittel (39) mit einer Übertragungsleistung erfolgen kann, die unter einem Grenzwert liegt, der vorzugsweise unter der Übertragungsleistung zwischen dem Netzwerkzugangspunkt (BS) und dem zweiten Endgerät (MS₂) liegt.

5. Verfahren nach einem der vorhergehenden Ansprüche, bei dem der Befehlsschritt ausgeführt wird, indem eine Befehlsmeldung (CMD) an das erste Endgerät (MS₁) gesendet wird, wobei das erste Endgerät (MS₁) so ausgelegt ist, dass es die Datei (FILE) als Reaktion auf die Befehlsmeldung (CMD) für eine bestimmte Zeitdauer speichert.

6. Verfahren nach Anspruch 5, bei dem die Zeitdauer in der Befehlsmeldung (CMD) angegeben ist.

7. Verfahren nach Anspruch 5 oder 6, bei dem die Datei (FILE) mit der Befehlsmeldung (CMD) an das erste Endgerät (MS₁) gesendet wird.

8. Verfahren nach einem der vorhergehenden Ansprüche, bei dem die Datei (FILE) verschlüsselt in dem ersten Endgerät (MS₁) gespeichert wird.

9. Verfahren nach Anspruch 8, das des Weiteren den Schritt der Übertragung eines Dechiffrierschlüssels von dem Netzwerkzugangspunkt (BS) an das zweite Endgerät (MS₂) umfasst.

10. System für das Übermitteln von Daten, das Mittel umfasst, die so ausgelegt sind, dass sie die Verfahrensschritte nach einem der vorhergehenden Ansprüche durchführen.

11. System nach Anspruch 10, bei dem die Mittel Softwarecode umfassen, der so ausgelegt ist, dass er die Verfahrensschritte nach einem der vorhergehenden Ansprüche 1 bis 10 durchführt, wenn er in einer Verarbeitungseinheit ausgeführt wird.

12. System nach Anspruch 11, bei dem sich die Verarbeitungseinheit im Netzwerk (NW) befindet.

## Revendications

1. Procédé pour fournir des données, **comprenant les étapes suivantes :**
- dans une étape de détection, à la détection dans un réseau (NW) qu'un fichier (FILE) a été transmis d'un point d'accès au réseau (BS), tel qu'une station de base, à plus d'un terminal (MS), commande d'un premier terminal (MS₁) pour stocker temporairement ledit fichier (FILE) ; et
- en réponse à la réception dans ledit réseau (NW) d'une requête (REQ) pour ledit fichier (FILE) provenant d'un deuxième terminal (MS₂), commande : a) du deuxième terminal (MS₂) pour récupérer le fichier (FILE) auprès du premier terminal (MS₁) ou b) du premier terminal (MS₁) pour transmettre le fichier (FILE) au deuxième terminal (MS₂).

2. Procédé selon la revendication 1, **dans lequel :** à l'étape de détection il est en outre contrôlé que la transmission du fichier (FILE) à plus d'un terminal (MS) a été effectuée en utilisant un canal de transmission, au moins certaines caractéristiques duquel satisfont à un critère prédéfini, tel que la puissance de transmission excédant un seuil.

3. Procédé selon la revendication 1 ou 2, **dans lequel** : la récupération du fichier (FILE) pour le deuxième terminal (MS₂) auprès du premier terminal (MS₁) ou la transmission du fichier (FILE) du premier terminal (MS₁) au deuxième terminal (MS₂) n'est commandée que si la transmission peut être effectuée en utilisant un moyen de communication local (39).

4. Procédé selon la revendication 3, **dans lequel :** la récupération du fichier (FILE) pour le deuxième terminal (MS₂) auprès du premier terminal (MS₁) ou la transmission du fichier (FILE) du premier terminal (MS₁) au deuxième terminal (MS₂) n'est commandée que si la transmission peut être effectuée en utilisant un moyen de communication local (39) avec une puissance de transmission inférieure à un seuil, le seuil étant préférablement inférieur à la puissance de transmission entre le point d'accès au réseau (BS) et le deuxième terminal (MS₂).

5. Procédé selon l'une quelconque des revendications précédentes, **dans lequel :** l'étape de commande est exécutée en envoyant un message de commande (CMD) au premier terminal (MS₁), le premier terminal (MS₁) étant adapté pour stocker ledit fichier (FILE) en réponse audit message de commande (CMD) pour une période de temps.

6. Procédé selon la revendication 5, **dans lequel :** la durée de ladite période de temps est indiquée dans le message de commande (CMD).

7. Procédé selon la revendication 5 ou 6, **dans lequel** : le fichier (FILE) est envoyé au premier terminal (MS₁) avec le message de commande (CMD).

8. Procédé selon l'une quelconque des revendications précédentes, **dans lequel** : le fichier (FILE) est stocké dans le premier terminal (MS₁) de manière cryptée.

9. Procédé selon la revendication 8, **comprenant en outre l'étape de** : transmission d'une clé de décryptage au deuxième terminal (MS₂) par le point d'accès au réseau (BS).

10. Système pour la fourniture de données, **comprenant** : des moyens adaptés pour mettre en oeuvre les étapes du procédé selon l'une quelconque des revendications précédentes.

11. Système selon la revendication 10, **dans lequel :** lesdits moyens comprennent un code logiciel, adapté pour mettre en oeuvre les étapes du procédé selon l'une quelconque des revendications précédentes 1 à 10, lorsque ce code est exécuté dans une unité de traitement.

12. Système selon la revendication 11, **dans lequel** : l'unité de traitement est dans le réseau (NW).
